# EUROPEAN PATENT SPECIFICATION

(11) **EP 1 816 698 B1**
(45) Date of publication and mention of the grant of the patent: **25.03.2009**
(21) Application number: 07000441.1
(22) Date of filing: 10.01.2007
(51) Int. Cl.: H01M 8/24

(54) **Pressure-adjustable fixture for fuel cell unit**
Druckeinstellbare Aufnahme für Brennstoffzelleneinheit
Appareil d'ajustement de pression pour une unité de pile à combustible

(30) Priority: 23.01.2006 CN 200610001947
(43) Date of publication of application: 08.08.2007
(73) Proprietor: Asia Pacific Fuel Cell Technologies, Ltd., Chunan, Miaoli 350 (TW)
(72) Inventor: Hsiao, Feng-Hsiang, Taipei 110 (TW); Lai, Ting-Yong, Miaoli County 350 (TW)
(74) Representative: Goddar, Heinz J.

(56) References cited:
- EP-A- 1 284 521
- EP-A1- 0 104 892
- US-A1- 2002 034 673
- US-B1- 6 200 698

## Description

### FIELD OF THE INVENTION

The present invention relates to a fixture for fuel cell unit, and more particularly, to a pressure-adjustable fixture for fuel cell unit testing.

### BACKGROUND OF THE INVENTION

The consumption of conventional energy sources, such as coal, petroleum, and natural gas, is constantly increased with the highly developed human civilization, resulting in serious environmental pollution on earth and worsened environment deterioration factors, such as greenhouse effect and acid rain. In view of the limited and gradually depleted natural energy sources, many highly developed countries have devoted to the development of new and alternative energy sources. Among others, fuel cell stack is a very important, highly potential and practical choice. As compared with the conventional internal combustion engine, the fuel cell stack has many advantages, including high energy conversion efficiency, clean exhaust, low noise, completely fuel-oil-free, etc.

A fuel cell stack includes a plurality of fuel cell units. Finished fuel cell units and fuel cell stacks are subject to test. In conventional test procedures, the fuel cell units in each fuel cell stack are firmly bound together using a plurality of bolts, so as to accept performance curve test.

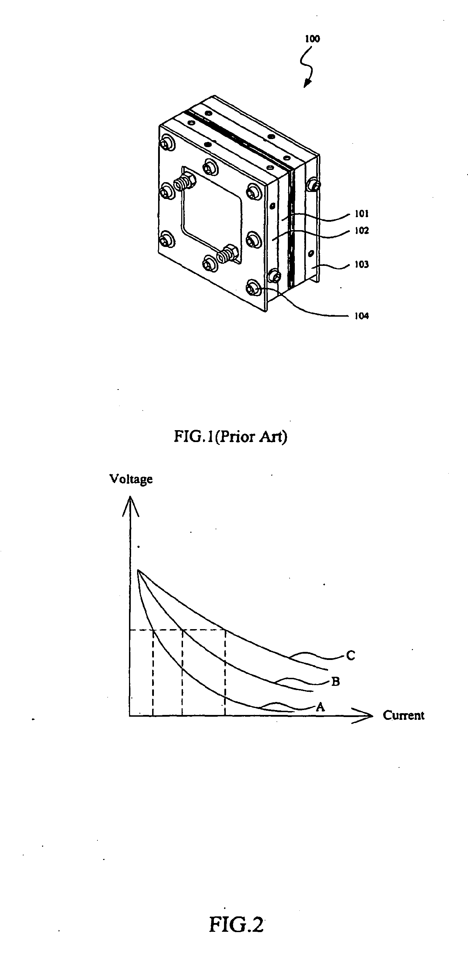

**Fig. 1** is a perspective view showing a fuel cell system **100** bound in a conventional way for performance test. As shown, the fuel cell units **101** included in the fuel cell system **100** are assembled and bound together by a plurality of bolts **104.** The fuel cell units **101** are protectively sandwiched between an upper protective plate **102** and a lower protective plate **103.** The bolts **104** provide pressure needed to tightly bind the fuel cell units **101** together. **Fig. 2** shows three representative performance curves **A, B,** and **C,** wherein the performance curve **C** represents a fuel cell unit having relatively high performance, the performance curve **A** represents a fuel cell unit having relatively low performance, and the performance curve **B** represents a fuel cell unit having normal performance.

With the plurality of bolts **104,** the fuel cell units are provided with a contact pressure. When the contact pressure is insufficient, the fuel cell units could not be tightly bound together and would therefore result in leakage of water or gas, as well as increased contact resistance between any two adjacent layers of fuel cell units **101** and accordingly reduced performance of the fuel cell units, as the performance curve **B** or even **A** shown in **Fig. 2****.** On the other hand, when the contact pressure is exceeded, the fuel cell units **101** would become deformed, warped, or even structurally destroyed. Therefore, the finished fuel cell units **101** subjected to performance test must be properly locked in place using bolts **104.** However, the bolts **104** used to lock and bind the fuel cell units **101** together do not always provide pressure that enables the tested fuel cell units to show their best performance. Moreover, since the contact pressure is not a fixed parameter, the performance curve obtained from the performance test might be inaccurate.

As having been mentioned above, when the contact pressure is exceeded, the fuel cell units **101** might become warped and/or leaked. Particularly, when the contact pressure is improperly or unevenly distributed over the tested fuel cell units, the fuel cell stack would have a raised central area. Moreover, it is time-consuming and troublesome to lock and bind the tested fuel cell units with so many bolts, which inevitably increases the manufacturing cost.

### SUMMARY OF THE INVENTION

It is therefore a primary object of the present invention to provide a pressure-adjustable fixture for fuel cell unit, so that optimal contact pressure may be supplied from a controllable pressure source to a group of fuel cell units or a fuel cell stack to be tested.

Another object of the present invention is to provide a pressure-adjustable fixture for fuel cell unit testing, so as to increase the accuracy of performance curves of tested fuel cell units.

A further object of the present invention is to provide a pressure-adjustable fixture for fuel cell unit testing, so that fuel cell units to be tested may be held in place without the need of using a large number of fastening bolts, and always have optimal contact pressure in the testing before and after the fuel cell units are formally manufactured.

A still further object of the present invention is to provide a pressure-adjustable fixture for fuel cell unit testing, so that fuel cell units may be more easily and accurately assembled.

With the pressure-adjustable fixture for fuel cell unit according to the present invention, fuel cell units to be tested may be tightly bound and sandwiched between two protective plates without the need of taking a lot of time to troublesomely fasten a large number of bolts, and all the layers of the tested fuel cell units are ensured to parallelly and closely contact with one another. That is, the fuel cell units can be quickly and tightly bound for dynamically testing their performance to obtain the performance curves thereof. With the pressure-adjustable fixture of the present invention, the fuel cell unit may be more easily and accurately assembled to effectively overcome the problems often occurred in the conventional way of fuel cell unit testing, in which the fuel cell units to be tested are tightened between two protective plates by a large number of bolts.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:

**Fig. 1** is a perspective view showing a conventional way of binding fuel cell units to be tested, in which the fuel cell units are bound between two protective plates using a plurality of bolts;

**Fig. 2** shows three representative performance curves of fuel cell units;

**Fig. 3** is a perspective view of a pressure-adjustable fixture for fuel cell unit testing according to the present invention; and

**Fig. 4** is a vertical sectional view of **Fig. 3****.**

### DETAILED DESCRIPTION OF THE PREFERRED EMBODIMENTS

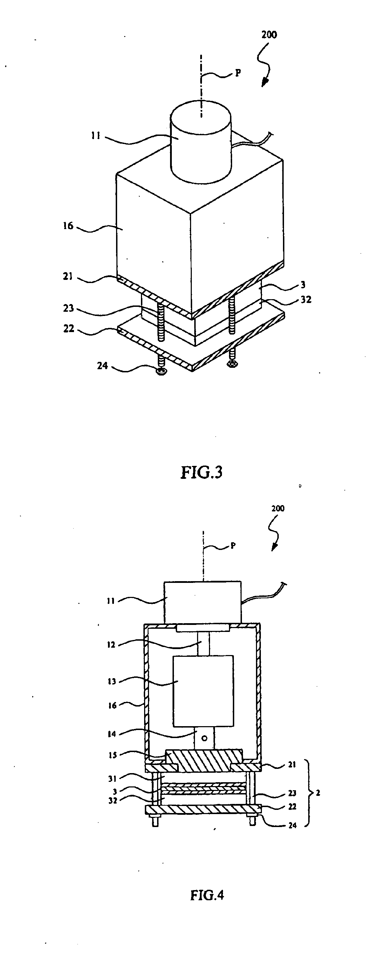

Please refer to **Figs. 3** and **4** that are perspective and vertical sectional views, respectively, of a pressure-adjustable fixture **200** according to the present invention. As shown, the pressure-adjustable fixture **200** is used to apply uniform pressure on a fuel cell unit or a group of fuel cell units **3,** and includes a controllable pressure source **11,** a transmission rod **12,** a pressure guiding mechanism **13,** a universal joint **14,** a press plate **15,** and a pressure-applying carrier mechanism **2.** Wherein, the transmission rod **12,** the pressure guiding mechanism **13,** the universal joint **14,** and the press plate **15** are enclosed in a fixture housing **16.** The pressure-applying carrier mechanism **2** includes an upper carrier plate **21,** a lower carrier plate **22,** and a plurality of bolts **23.** The controllable pressure source **11** may be an air press, an oil press, a manually controlled pressure device, or any device for supplying pressure, such as a motor or a manual driver.

To use the pressure-adjustable fixture **200,** the controllable pressure source **11** is caused to supply an amount of pressure, which is transmitted to the pressure guiding mechanism **13** via the transmission rod **12** that is connected to the controllable pressure source **11.**

The pressure guiding mechanism **13** receives the pressure come from the transmission rod **12,** and guides the same pressure to the universal joint **14,** which is connected to an end of the pressure guiding mechanism **13** opposite to the transmission rod **12.** The universal joint **14** further guides the pressure come from the pressure guiding mechanism **13** to the press plate **15** connected to the universal joint **14** opposite to the pressure guiding mechanism **13.** With the universal joint **14,** pressure that is deviated from a vertical center axis **P** of the pressure-adjustable fixture **200** may be adjusted to become parallel with the vertical center axis **P.** As a result, the pressure supplied by the controllable pressure source **11** is always uniformly and parallelly guided to the press plate **15.**

The group of fuel cell units **3** is loaded on the pressure-applying carrier mechanism **2** between the upper carrier plate **21** and the lower carrier plate **22.** The upper and the lower carrier plate **21, 22** are bearing on an upper and a lower protective plate **31** located at two opposite sides of the group of fuel cell units **3,** respectively. The pressure supplied by the controllable pressure source **11** and guided to the press plate **15** is uniformly distributed via the press plate **15** over the upper protective plate **31** of the fuel cell units **3,** so the fuel cell units **3** located between the upper and the lower protective plate **31, 32** are bound together to tightly contact with one another. The plurality of bolts **23** of the pressure-applying carrier mechanism **2** are extended through the upper and the lower carrier plate **21, 22** and tightened, so as to locate the fuel cell units **3** on the pressure-applying carrier mechanism **2** at a predetermined position.

With the pressure-adjustable fixture for fuel cell unit testing according to the present invention, a group of fuel cell units to be tested may be tightly bound between two protective plates without the need of taking a lot of time to troublesomely fasten a large number of bolts, and all the layers of the tested fuel cell units are ensured to parallelly and closely contact with one another. That is, the fuel cell units can be quickly and tightly bound between the protective plates and then sandwiched between the upper and the lower carrier plate for dynamically testing their performance to obtain the performance curves thereof. With the pressure-adjustable fixture of the present invention, the fuel cell units in the test stage can be kept in tightly bound state while being moved among different testing apparatus, and pressure may be uniformly distributed over the fuel cell units before the same are fastened with bolts, so that the fuel cell units may be easily fastened and assembled in the subsequent procedures.

## Claims

1. A pressure-adjustable fixture (200) for uniformly distributing pressure over at least one fuel cell unit (3), comprising:
a controllable pressure source (11) for supplying an amount of pressure and having a transmission rod (12);
a pressure guiding mechanism (13) connected to the transmission rod (12) of the controllable pressure source (11) for transmitting the pressure supplied by the controllable pressure source (11); and
a press plate (15) connected to the pressure guiding mechanism (13) opposite to the transmission rod (12), so that the pressure supplied by the controllable pressure source (11) and transmitted via the pressure guiding mechanism (13) to the press plate (15) is uniformly distributed over the at least one fuel cell unit (3).

2. The pressure-adjustable fixture (200) according to claim 1, **characterized in that** the controllable pressure source (11) is an air press.

3. The pressure-adjustable fixture (200) according to claim 1, **characterized in that** the controllable pressure source (11) is an oil press.

4. The pressure-adjustable fixture (200) according to claim 1, **characterized by** a pressure-applying carrier mechanism (2), on which the at least one fuel cell unit (3) to be tested is loaded.

5. The pressure-adjustable fixture (200) according to claim 4, **characterized in that** the pressure-applying carrier mechanism (2) includes an upper carrier plate (21), a lower carrier plate (22) located at a predetermined distance from the upper carrier plate (21) for carrying the at least one fuel cell unit (3) thereon, and a plurality of bolts (23) extended through the upper and the lower carrier plate (21, 22) to firmly hold the fuel cell unit (3) to the pressure-applying carrier mechanism (2) at a predetermined position.

6. The pressure-adjustable fixture (200) according to claim 1, **characterized in that** the pressure guiding mechanism (13) includes a universal joint (14), via which the pressure supplied by the controllable pressure source (11) and transmitted via the pressure guiding mechanism (13) to the press plate (15) is uniformly distributed over the at least one fuel cell unit (3).

## Patentansprüche

1. Druckregelbare Einspannung (200) zum gleichmäßigen Verteilen von Druck über wenigstens eine Brennstoffzelleneinheit (3), mit:
einer steuerbaren Druckquelle (11) zum Bereitstellen eines Druckbetrags und mit einem Übertragungsstab (12);
einem Druck leitenden Mechanismus (13), der mit dem Übertragungsstab (12) der steuerbaren Druckquelle (11) verbunden ist, zum Übertragen des von der steuerbaren Druckquelle (11) bereitgestellten Drucks; und
einer Druckplatte (15), die mit dem Druck leitenden Mechanismus (13) dem Übertragungsstab (12) gegenüberliegend verbunden ist, so dass der von der steuerbaren Druckquelle (11) bereitgestellte und über den Druck leitenden Mechanismus (13) an die Druckplatte (15) übertragene Druck gleichmäßig über die wenigstens eine Brennstoffzelleneinheit (3) verteilt ist.

2. Druckregelbare Einspannung (200) nach Anspruch 1, **dadurch gekennzeichnet, dass** die steuerbare Druckquelle (11) ein Luftdruck ist.

3. Druckregelbare Einspannung (200) nach Anspruch 1, **dadurch gekennzeichnet, dass** die steuerbare Druckquelle (11) ein Öldruck ist.

4. Druckregelbare Einspannung (200) nach Anspruch 1, **gekennzeichnet durch** einen Druck anlegenden Trägermechanismus (2), auf dem die wenigstens eine Brennstoffzelleneinheit (3), die getestet wird, beladen wird.

5. Druckregelbare Einspannung (200) nach Anspruch 4, **dadurch gekennzeichnet, dass** der Druck anlegende Trägermechanismus (2) eine obere Trägerplatte (21), eine untere Trägerplatte (22), die in einem vorbestimmten Abstand von der oberen Trägerplatte (21) zum Tragen der wenigstens einen Brennstoffzelleneinheit (3) angeordnet ist, und eine Mehrzahl von Bolzen (23) aufweist, die sich durch die obere und die untere Trägerplatte (21, 22) erstrecken, um die Brennstoffzelleneinheit (3) fest am Druck anlegenden Trägermechanismus (2) an der vorbestimmten Position zu halten.

6. Druckregelbare Einspannung (200) nach Anspruch 1, **dadurch gekennzeichnet, dass** der Druck leitende Mechanismus (13) eine allgemeine Verbindung (14) aufweist, über die der Druck, der von der steuerbaren Druckquelle (11) bereitgestellt und über den Druck leitenden Mechanismus (13) an die Druckplatte (15) übertragen wird, gleichmäßig über die Brennstoffzelleneinheit (3) verteilt wird.

## Revendications

1. Dispositif réglable en pression (200) pour distribuer uniformément une pression par-dessus au moins une unité de pile à combustible (3), comprenant :
une source de pression contrôlable (11) pour fournir une quantité de pression et ayant une tige de transmission (12) ;
un mécanisme de guidage de pression (13) connecté à la tige de transmission (12) de la source de pression contrôlable (11) pour transmettre la pression fournie par la source de pression contrôlable (11) ; et
une plaque de presse (15) raccordée au mécanisme de guidage de pression (13) opposée à la tige de transmission (12), de telle sorte que la pression fournie par la source de pression contrôlable (11) et transmise par l'intermédiaire du mécanisme de guidage de pression (13) à la plaque de presse (15) soit distribuée uniformément par-dessus l'au moins une unité de pile à combustible (3).

2. Dispositif réglable en pression (200) selon la revendication 1, **caractérisé en ce que** la source de pression contrôlable (11) est une presse à air.

3. Dispositif réglable en pression (200) selon la revendication 1, **caractérisé en ce que** la source de pression contrôlable (11) est une presse à huile.

4. Dispositif réglable en pression (200) selon la revendication 1, **caractérisé par** un mécanisme porteur applicateur de pression (2), sur lequel est chargée l'au moins une unité de pile à combustible (3) à tester.

5. Dispositif réglable en pression (200) selon la revendication 4, **caractérisé en ce que** le mécanisme porteur applicateur de pression (2) comporte une plaque porteuse supérieure (21), une plaque porteuse inférieure (22) située à une distance prédéterminée de la plaque porteuse supérieure (21) pour porter l'unité de pile à combustible (3), et une pluralité de boulons (23) étendue à travers les plaques porteuses supérieure et inférieure (21, 22) afin de maintenir fermement l'unité de pile à combustible (3) sur le mécanisme porteur applicateur de pression (2) à une position prédéterminée.

6. Dispositif réglable en pression (200) selon la revendication 1, **caractérisé en ce que** le mécanisme de guidage de pression (13) comporte une articulation à la cardan (14), par l'intermédiaire de laquelle la pression fournie par la source de pression contrôlable (11) et transmise par l'intermédiaire du mécanisme de guidage de pression(13) à la plaque de presse (15) est distribuée uniformément par-dessus l'au moins une unité de pile à combustible (3).
